# EUROPÄISCHE PATENTSCHRIFT

(11) **EP 1 953 667 B1**
(45) Veröffentlichungstag und Bekanntmachung des Hinweises auf die Patenterteilung: **22.10.2014**
(21) Anmeldenummer: 08100082.0
(22) Anmeldetag: 03.01.2008
(51) Int. Cl.: G06F 21/85

(54) **Schnittstellenüberwachungsvorrichtung und Verfahren zum Überwachen eines Schnittstellenanschlusses**
Interface monitoring device and method for monitoring an interface connection
Dispositif de surveillance d'interface et procédé de surveillance d'une liaison d'interface

(30) Priorität: 01.02.2007 DE 102007005113
(43) Veröffentlichungstag der Anmeldung: 06.08.2008
(73) Patentinhaber: Fujitsu Technology Solutions Intellectual Property GmbH, 80807 München (DE)
(72) Erfinder: Markel, Ottwald, 86199 Augsburg (DE); Häußermann, Rudolf, 86150 Augsburg (DE); Bossek, Wolfgang, 86169 Augsburg (DE); Cestonaro, Ingo, 86199 Augsburg (DE)
(74) Vertreter: Epping - Hermann - Fischer

(56) Entgegenhaltungen:
- EP-A- 1 248 179
- EP-A- 1 418 504
- EP-A- 1 429 226
- DE-A1-102005 009 357
- US-A- 6 009 527
- US-A1- 2003 056 051

## Beschreibung

Die Erfindung betrifft eine Schnittstellenüberwachungsvorrichtung mit mindestens einem Schnittstellenanschluss für ein Peripheriegerät, einer Überwachungsschaltung und einer Steuervorrichtung. Des Weiteren betrifft die Erfindung ein Verfahren zum Überwachen eines Schnittstellenanschlusses.

Mit fortschreitender Verbreitung des so genannten Universal Serial Bus (USB) werden immer mehr externe und interne Geräte über diesen Schnittstellentyp an Computersysteme angeschlossen. Daraus ergibt sich eine Vereinfachung für den Benutzer, weil prinzipiell jedes Gerät an jede freie USB-Schnittstelle, auch genannt USB-Port, angeschlossen werden kann. Darüber hinaus ergibt sich jedoch auch ein Kostenvorteil für Hersteller von Computersystemen und Peripheriegeräten, da durch die weite Verbreitung von USB-Schnittstellen die zugehörigen Controller sehr kostengünstig gefertigt werden können und zugleich auf den Einsatz weiterer, proprietärer Schnittstellen und zugehöriger Controller verzichtet werden kann.

Die weite Verbreitung von USB-Schnittstellen und Geräten birgt jedoch auch Nachteile. Insbesondere entstehen durch die Verbreitung von USB-Massenspeichergeräten, wie beispielsweise so genannten Memory Sticks, Probleme mit der Datensicherheit. Denn zum einen können über solche USB-Geräte Viren und anderer gefährlicher Code auf ein Computersystem übertragen werden, zum anderen erlaubt ein USB-Stick auch ein schnelles und schwer zu erkennendes Stehlen umfangreicher vertraulicher Daten.

Aus der DE 102005009357 A1 ist ein Computersystem mit einer Schnittstellenvorrichtung und deaktivierbaren Datenanschlüssen bekannt. Obwohl die darin vorgestellte Lösung ein Absichern eines Computersystems durch Abschaltung externer USB-Anschlüsse bedeutet, lässt sie sich insbesondere bei Systemen mit daran angeschlossenen externen Ein- und Ausgabekomponenten, wie beispielsweise einer USB-Maus und einer USB-Tastatur nicht verwenden.

Ein Sicherheitssystem zur Sicherung von Hochgeschwindigkeitsbussen eines Computersystems, insbesondere Bussen mit direktem Speicherzugriff, ist aus der US 6,009,527 bekannt. Die dort vorgestellte Lösung verwendet eine sekundäre Verbindung eines Bussystems, um die Identität angeschlossener Peripheriekomponenten zu überprüfen, bevor eine Hochgeschwindigkeitsverbindung aktiviert wird.

Eine Schnittstellenüberwachungsvorrichtung mit einer Überwachungsschaltung ist aus dem US-Patent 7,043,587 B2 bekannt. Darin überwacht eine so genannte USB Hot-Plug Detektorschaltung die differentiellen Datenleitungen eines USB-Anschlusses auf Anschluss eines USB-Gerätes. Wird der Anschluss eines USB-Gerätes erkannt, wird ein System-Management-Interrupt (SMI) an den Prozessor des Computersystems gesendet, und dadurch ein Systemmanagementmodus initiiert. Auch diese Lösung bietet keinen vollständigen Schutz, da eine Überwachung erst beim Anschließen eines neuen Gerätes und nur durch eine möglicherweise manipulierbare Softwarekomponente durchgeführt wird.

Aufgabe der vorliegenden Erfindung ist es daher, die bekannten Lösungen derart weiterzuentwickeln, dass jegliche Manipulation von an dem Computer angeschlossenen USB-Geräten sicher erkannt und verhindert werden kann.

Die zugrunde liegende Aufgabe wird durch eine Schnittstellenüberwachungsvorrichtung der oben genannten Art gelöst, wobei die Überwachungsschaltung eine Monoflopschaltung umfasst, über die eine Inaktivität wenigstens einer Datenleitung des wenigstens einen Schnittstellenanschlusses erkannt wird und die Überwachungsschaltung dazu eingerichtet ist, den wenigstens einen Schnittstellenanschluss auf ein Trennen eines daran angeschlossenen Peripheriegerätes hin zu überwachen, und wobei die Steuervorrichtung dazu eingerichtet ist, den wenigstens einen Schnittstellenanschluss in jeder der folgenden Situationen dauerhaft bis zu einem Neustart der Schnittstellenüberwachungsvorrichtung zu deaktivieren: wenn an dem wenigstens einem Schnittstellenanschluss bei einer Initialisierung kein oder ein nicht zugelassenes Peripheriegerät angeschlossen ist oder wenn ein Trennen eines daran angeschlossenen Peripheriegerätes durch die Überwachungsschaltung erkannt wurde.

Durch eine dauerhafte Deaktivierung eines ungenutzten Schnittstellenanschlusses schon bei der Initialisierung des Schnittstellenanschlusses bleiben ungenutzte USB-Anschlüsse von vorneherein deaktiviert, sodass durch den nachträglichen Anschluss eines USB-Gerätes auch kein Datenschutzproblem entstehen kann. Durch die zusätzliche Überwachung eines bei der Initialisierung des Schnittstellenanschlusses aktiven USB-Anschlusses auf ein Trennen eines daran angeschlossenen Peripheriegerätes wird des Weiteren ein Ersetzen eines an sich harmlosen Gerätes, wie eine USB-Tastatur oder eine USB-Maus, durch ein anderes, möglicherweise gefährliches Peripheriegerät sicher erkannt, sodass Datenschutzprobleme vermieden werden können.

Durch Verwendung einer Monoflop-Schaltung wird der Einsatz von Programmcode zur Überwachung der Schnittstelle vermieden, sodass eine sichere Erkennung unter allen Umständen möglich und eine Manipulation per Software ausgeschlossen ist.

Gemäß einer vorteilhaften Ausgestaltung ist die Steuervorrichtung in ein BIOS integriert und die Überwachungsschaltung schickt im Falle eines Trennens ein Signal an das BIOS. Durch Integration der Steuervorrichtung in das BIOS können Vorgaben und Benutzereinstellungen zur Entscheidung, welche Schnittstellen und Peripheriegeräte überwacht werden sollen, berücksichtigt werden.

Gemäß einer weiteren vorteilhaften Ausgestaltung der Erfindung ist die Steuervorrichtung als Hardwareschaltung ausgeführt, wobei im Falle eines Trennens wenigstens ein Anschluss des wenigstens einen Schnittstellenanschlusses dauerhaft deaktiviert wird. Durch Deaktivieren wenigstens eines Anschlusses mittels einer Hardwareschaltung kann jegliche Manipulation an der Schnittstellenüberwachungsvorrichtung ausgeschlossen werden.

Die zugrunde liegende Aufgabe wird ebenso durch ein Verfahren zum Überwachen eines Schnittstellenanschlusses durch eine Schnittstellenüberwachungsvorrichtung gelöst, das die folgenden Schritte aufweist:
a) Initialisieren des Schnittstellenanschlusses,
b) Erkennen, ob ein Peripheriegerät an dem Schnittstellenanschluss angeschlossen ist,
c) Deaktivieren des Schnittstellenanschlusses, wenn kein Peripheriegerät an dem Schnittstellenanschluss erkannt wurde,
d) Erkennen des Gerätetyps, wenn ein Peripheriegerät an dem Schnittstellenanschluss erkannt wurde,
e) Deaktivieren des Schnittstellenanschlusses, wenn der erkannte Gerätetyp einer nicht zugelassenen Geräteklasse entspricht,
f) fortlaufendes Überwachen des Schnittstellenanschlusses auf ein Trennen des an den Schnittstellenanschluss angeschlossenen Peripheriegerätes, wobei mittels einer Monoflopschaltung eine Inaktivität wenigstens einer Datenleitung (15) des wenigstens einen Schnittstellenanschlusses (2) erkannt wird, und
g) Deaktivieren des Schnittstellenanschlusses, wenn ein Trennen des Peripheriegerätes erkannt wurde,
   wobei
   die Deaktivierung des Schnittstellenanschlusses (2) nur durch einen Neustart der Schnittstellenüberwachungsvorrichtung (1) mit anschließender erneuten Überwachung des Schnittstellenanschlusses (2) gemäß den Schritten a) bis g) oder über einen geschützten Zugang zu der Schnittstellenüberwachungsvorrichtung (1) aufgehoben werden kann.

Durch die oben genannten Schritte wird eine umfangreiche und fortlaufende Überwachung von Schnittstellenanschlüssen ermöglicht, die jegliche Manipulation von an den Computer angeschlossenen USB-Geräten sicher erkennt.

Weitere Einzelheiten und Ausgestaltungen der Erfindung sind in den Unteransprüchen angegeben.

Die Erfindung wird nachfolgend an einem Ausführungsbeispiel anhand der Zeichnungen näher erläutert. In den Zeichnungen zeigen:
- Figur 1: eine schematische Darstellung einer Schnittstellenüberwachungsvorrichtung,
- Figur 2: einen Ersatzschaltplan einer Überwachungsschaltung und
- Figur 3: ein Ablaufdiagramm eines Verfahrens zum Überwachen eines Schnittstellenanschlusses.

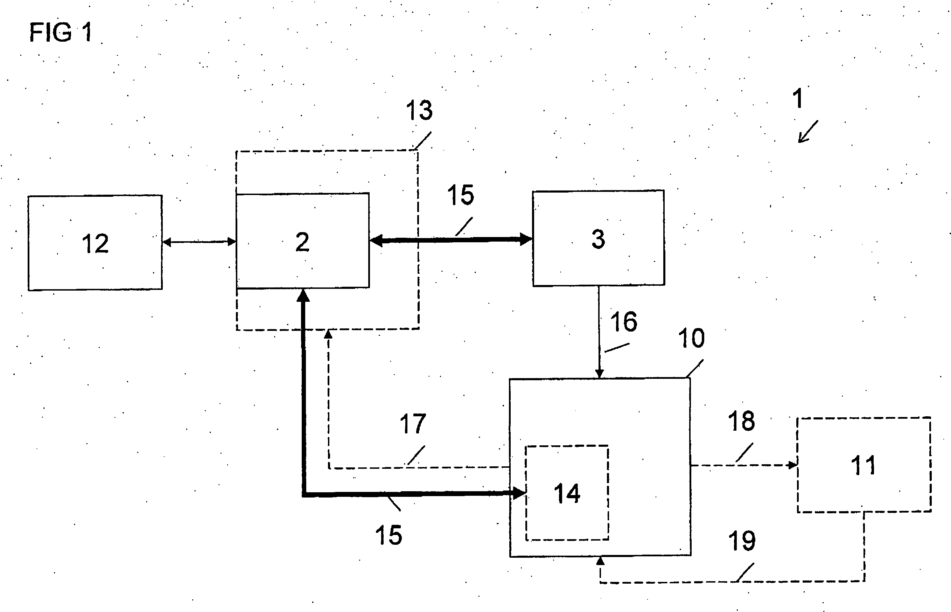

Figur 1 zeigt eine schematische Darstellung einer Anordnung einer Schnittstellenüberwachungsvorrichtung 1 gemäß einem Ausführungsbeispiel. Die Schnittstellenüberwachungsvorrichtung 1 umfasst einen Schnittstellenanschluss 2 zum Anschließen eines Peripheriegerätes 12. Beispielsweise handelt es sich bei dem Schnittstellenanschluss 2 um einen externen USB-Anschluss eines Computersystems und bei dem Peripheriegerät 12 um eine daran angeschlossene Tastatur.

Des Weiteren umfasst die Schnittstellenüberwachungsvorrichtung 1 eine Überwachungsschaltung 3 und eine Steuervorrichtung 10, die beide über wenigstens eine Datenleitung 15 mit dem Schnittstellenanschluss 2 verbunden sind. Im Ausführungsbeispiel handelt es sich bei den Datenleitungen 15 um die differentiellen Signalleitungen D+ und D- gemäß dem USB Standard. Zusätzlich ist die Überwachungsschaltung 3 über ein erste Steuersignalleitung 16 mit der Steuervorrichtung 10 verbunden. Beispielsweise kann ein GPIO-Baustein vorgesehen sein, der den Zustand der ersten Steuersignalleitung 16 überwacht und bei Signaländerungen einen System-Management-Interrupt (SMI) erzeugt.

Die Steuervorrichtung 10 dient zum Deaktivieren des Schnittstellenanschlusses 2 und verfügt in einer Ausgestaltung über Statusregister 14, die eine Funktion oder Nichtfunktion des Schnittstellenanschlusses 2 kontrollieren. Beispielsweise kann es sich bei der Steuervorrichtung 10 um die so genannte Southbridge eines Computersystems mit darin enthaltenem Super-IO-Baustein handeln.

In einer alternativen Ausgestaltung umfasst die Schnittstellenüberwachungsvorrichtung 1 eine zweite Steuersignalleitung 17 und eine daran angeschlossene Trennschaltung 13 zum Abschalten des Schnittstellenanschlusses 2. Eine solche Schaltung ist beispielsweise in der DE 102005009357 A1 beschrieben. Beispielsweise ist es möglich, zumindest eine der Datenleitungen 15 des Schnittstellenanschlusses 2 auf ein vorbestimmtes Potential zu legen, um eine weitere Kommunikation über den Schnittstellenanschluss 2 zu verhindern. Selbst wenn ein USB-Controller einen Versuch unternähme, ein neu an den Datenanschluss 2 angeschlossenes USB-Peripheriegerät 12 mittels Enumeration zu erkennen, bliebe dieser erfolglos.

Optional kann die Steuervorrichtung 10 über eine dritte Steuersignalleitung 18 und eine vierte Steuersignalleitung 19 auch mit einem BIOS 11 des Computersystems verbunden werden. Auf diese Weise lassen sich Steuerfunktionen der Steuervorrichtung 10 zumindest teilweise in Programmcode des BIOS 11 auslagern beziehungsweise Voreinstellungen des BIOS 11 durch die Steuervorrichtung 10 berücksichtigen. Beispielsweise kann es sich bei der dritten Steuersignalleitung 18 um eine Leitung zum Übertragen eines System-Management-Interrupts (SMI) handeln. Alternativ kann die Steuervorrichtung 10 auch komplett in das BIOS 11 integriert werden. Auch die Benachrichtigung eines Benutzers oder Systemadministrators über einen ausgelösten SMI ist möglich.

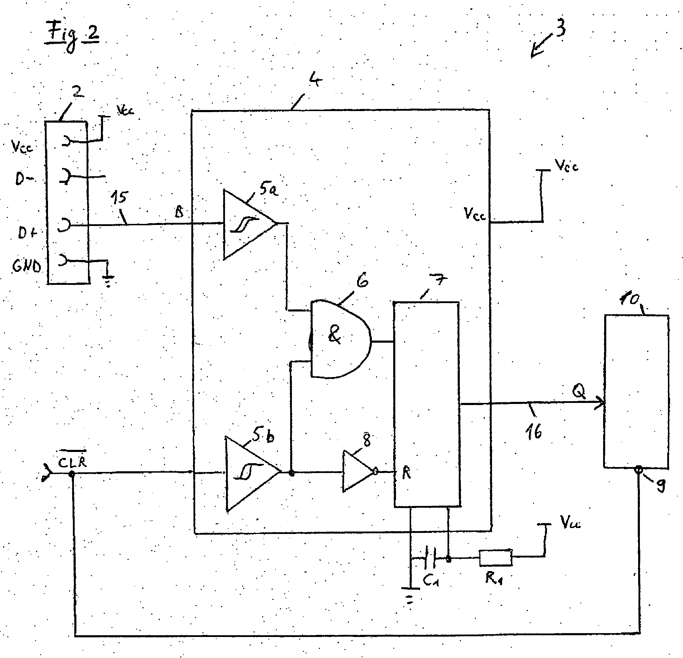

Figur 2 zeigt ein Ersatzschaltbild von Teilen der Systemüberwachungsvorrichtung 1, insbesondere der Überwachungsschaltung 3. Die Überwachungsschaltung 3 wird im vorliegenden Ausführungsbeispiel durch einen integrierten Schaltkreis 4 sowie zugehörige Ansteuerelektronik gebildet, die zusammen eine rückgekoppelte Monoflop-Schaltung bilden.

Der integrierte Schaltkreis 4 umfasst im Ausführungsbeispiels zwei Schmitt-Trigger-Schaltungen 5a und 5b zum Formen wohldefinierter logischer Signalpegel, die mit den Eingängen B und *C̅L̅R̅* verbunden sind. Es kann jedoch auch eine Schaltung mit nur einer Schmitt-Trigger-Schaltung 5a verwendet werden, da das Eingangssignal *C̅L̅R̅* ohnehin wohldefiniert ist. Die Ausgänge der Schmitt-Trigger-Schaltungen 5a und 5b sind mit den Eingängen eines UND-Gatters 6 verbunden. Der Ausgang des UND-Gatters 6 ist mit einer Zeitgeberschaltung 7 verbunden.

Des Weiteren ist der Ausgang der Schmitt-Trigger-Schaltung 5b über einen Inverter 8 ebenfalls mit der Zeitgeberschaltung 7, insbesondere dem Reset-Signaleingang R der Zeitgeberschaltung 8, verbunden. Die Zeitgeberschaltung 7 wird über einen externen Kondensator C₁ und einen externen Widerstand R₁ dimensioniert, um die durch die Zeitgeberschaltung 7 verwendete Verzögerung einzustellen.

Der Eingang B des integrierten Schaltkreis 4 ist auf der einen Seite mit der Schmitt-Trigger-Schaltung 5a, auf der anderen Seite mit einer Datenleitung 15, beispielsweise der Datensignalleitung D+, des Schnittstellenanschlusses 2 verbunden. Da es sich bei dem Schnittstellenanschluss 2 um einen differentiellen Schnittstellenanschluss handelt, könnte der Eingang B jedoch ebenso mit dem negativen Datensignalleitung D- verbunden werden.

Gemäß dem USB-Protokoll findet zwischen einem USB-Peripheriegerät 12 und einem zugehörigen Hostsystem, im Ausführungsbeispiel der Steuervorrichtung 10, neben dem eigentlichen Datenaustausch auch eine so genannte Frame-Kommunikation statt, bei der im so genannten Full Speed Mode ein Frame entsprechend einer Signallänge von 1ms und im so genannten High Speed Mode ein µ-Frame entsprechend einer Signallänge von 125µs übermittelt wird. Diese Frame-Kommunikation setzt die Zeitgeberschaltung 7 in regelmäßigen, sehr kurzen Zeitabständen zurück, so dass kein Zeitablauf eintritt, so lange ein Peripheriegerät 12 an den Datenanschluss 2 angeschlossen ist. Wird das Peripheriegerät 12 jedoch entfernt, läuft die vorbestimmte Zeit der Zeitgeberschaltung 7 aus, ohne dass ein neues Signal am Eingang B anliegt.

Der Eingang *C̅L̅R̅* des integrierten Schaltkreis 4, der mit der Schmitt-Trigger-Schaltung 5b verbunden ist, muss auf einem hohen Signalpegel liegen, um die Überwachungsschaltung zu aktivieren. Bei Anliegen eines niedrigen Signalpegels blockiert die Überwachungsschaltung von vorneherein, so dass auch der Schnittstellenanschluss 2 deaktiviert bleibt.

Der Ausgang Q des integrierten Schaltkreis 4 ist über die erste Steuersignalleitung 16 mit der Steuervorrichtung 10 verbunden. Die Steuervorrichtung 10 ist dazu eingerichtet, den Schnittstellenanschluss 2 wie oben beschrieben zu deaktivieren. Des Weiteren ist ein Steuerausgang 9 der Steuervorrichtung 10 auf den Eingang *C̅L̅R̅* zurückgekoppelt, so dass ein Deaktivierung des Schnittstellenanschlusses 2 durch die Steuervorrichtung 10 zu einer dauerhaften Deaktivierung des integrierten Schaltkreises 9 führt, indem das Signal *C̅L̅R̅* auf einen niedrigen Signalpegel gelegt wird.

Während der Initialisierung des Computersystems und somit der Schnittstellenüberwachungsvorrichtung 1 sowie des Schnittstellenanschlusses 2 muss das Löschsignal *C̅L̅R̅* auf einen hohen Signalpegel gesetzt werden, um eine Aktivierung des Schnittstellenanschlusses 2 durch die Überwachungsschaltung 3 zu ermöglichen. Innerhalb einer durch das RC-Glied vorgegebenen Zeitspanne der Zeitgeberschaltung 7 muss ein an den Datenanschluss 2 angeschlossenes Peripheriegerät 12 durch die Überwachungsschaltung 3 erkannt werden. Hierzu wird über den Eingang B des integrierten Schaltkreis 4 wenigstens eine Datenleitungen 15 des Datenanschlusses 2 auf Aktivität überwacht.

So lange ein Peripheriegerät 12 an dem Datenanschluss 2 angeschlossen ist und somit in regelmäßigen Abständen Signale über die Datenleitung D- oder D+ austauscht, wird die Monoflop-Schaltung ständig nachgetriggert, sodass die Zeitgeberschaltung 7 stets zurückgesetzt wird. Wird ein an den Datenanschluss 2 angeschlossenes Peripheriegerät 12 jedoch von dem Schnittstellenanschluss 2 getrennt, werden keine neuen Impulse über den Eingang B an den integrierten Schaltkreis 4 gesendet, sodass der Ausgang des UND-Gitters auf einen niedrigen logischen Wert abfällt, und die Zeitgeberschaltung 7 nach dem vorbestimmten Zeitraum das Steuersignal Q abschaltet. Die Steuervorrichtung 10 reagiert hierauf, in dem sie den Schnittstellenanschluss 2 mittels der Rückkopplung über den Steuerausgang 9 dauerhaft abschaltet, sodass ein nachträglich an den Schnittstellenanschluss 2 angeschlossenes Peripheriegerät 12 durch das Computersystem erst gar nicht erkannt werden kann.

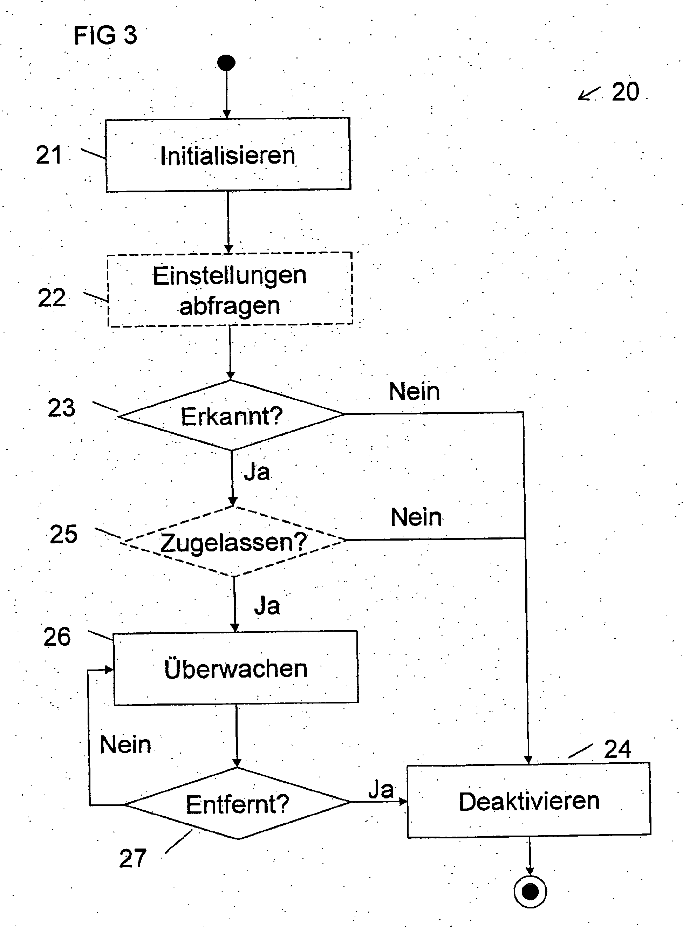

Figur 3 zeigt ein Ablaufdiagramm eines Verfahrens 20 zum Überwachen eines Schnittstellenanschlusses 2.

In einem ersten Schritt 21 wird der Schnittstellenanschluss 2 initialisiert. Im Ausführungsbeispiel findet die Initialisierung des Schnittstellenanschlusses 2 zusammen mit einer Initialisierung des Computersystems und einer darin enthaltenen Überwachungsschaltung 3 sowie der Steuervorrichtung 10 durchgeführt, in dem das Löschsignal *C̅L̅R̅* auf einen hohen Signalpegel gesetzt wird.

In einem optionalen Schritt 22 wird geprüft, ob der Schnittstellenanschluss 2 grundsätzlich deaktiviert bleiben soll. Beispielsweise ist es möglich, in einem BIOS 11 eine Voreinstellung vorzunehmen, um bestimmte, beispielsweise externe Schnittstellenanschlüsse 2, grundsätzlich von einer Aktivierung auszunehmen.

In einem Schritt 23 wird überprüft, ob an dem Schnittstellenanschluss 2 ein Peripheriegerät 12 angeschlossen ist. Beim Initialisieren des Schnittstellenanschlusses 2 reagiert beispielsweise ein daran angeschlossenes Peripheriegerät 12 durch Übermittlung einer Gerätekennung.

Wird eine solche Gerätekennung nicht über die Datenleitungen 15 des Schnittstellenanschlusses 2 empfangen, wird durch die Überwachungsschaltung 3 auch kein Peripheriegerät 12 erkannt und in einem nachfolgenden Schritt 24 der Schnittstellenanschluss 2 dauerhaft deaktiviert. Zur dauerhaften Deaktivierung wird beispielsweise ein Statusregister eines dem Schnittstellenanschluss 2 zugehörigen Controllers deaktiviert oder eine Trennschaltung 13 durch Bereitstellen eines geeigneten Steuersignals aktiviert.

Wird stattdessen ein angeschlossenes Peripheriegerät 12 an dem Datenanschluss 2 erkannt, wird im optionalen Schritt 25 überprüft, ob es sich bei dem daran angeschlossenen Peripheriegerät 12 um ein zugelassenes Gerät handelt. Die Prüfung kann beispielsweise durch die Steuervorrichtung 10 durchgeführt werden und anhand der Geräteklassen erfolgen. Es ist auch möglich, die zugelassenen Peripheriegeräte 12 auf solche Geräteklassen zu beschränken, die ein in dem Computer vorhandenes BIOS 11 unterstützt. Dabei handelt es sich typischerweise um reine Eingabegeräte, wie beispielsweise eine Tastatur oder eine Maus.

Handelt es sich um ein zugelassenes Peripheriegerät 12, wird in einem nachfolgenden Schritt 26 die Überwachungsschaltung 3 aktiviert. Im beschriebenen Ausführungsbeispiel beginnt der Zeitgeber 7 mit der Überwachung des Ausgangs des UND-Gatters 6.

Sobald der Eingang B des integrierten Schaltkreis 4 auf einen niedrigen logischen Wert abfällt oder der Zeitgeber 7 abläuft, wird das Ausgangssignal Q auf einen niedrigen Signalpegel gesetzt.

Dies ist insbesondere beim Trennen des Peripheriegerätes 12 der Fall, da in diesem Fall keine positiven Steuerpulse mehr an den Eingang B des integrierten Schaltkreis 4 bereitgestellt werden. Somit findet eine kontinuierliche Überwachung des Schnittstellenanschlusses 2 statt, wie durch die in den Schritten 26 und 27 dargestellte Schleife angedeutet ist.

Tritt an dem Datenanschluss 2 ein so genannter Timeout, also ein Auslaufen des Zeitgebers 7 auf, wird der Datenanschluss 2 durch die Steuervorrichtung 10 endgültig gesperrt. Gleichzeitig sorgt die Rückkopplung über den *C̅L̅R̅*-Eingang dafür, dass die Schnittstellenüberwachungsvorrichtung 1 nicht erneut aktiviert werden kann. Eine solche Sperre kann nur durch einen Neustart mit anschließender erneuten Überwachung des Schnittstellenanschlusses 2 oder durch einen Eingriff eines besonders autorisierten Systemadministrators, der über einen geschützten Zugang zu der Schnittstellenüberwachungsvorrichtung 1 verfügt, aufgehoben werden.

In einer verbesserten Ausgestaltung werden Informationen über das Auslösen der Schnittstellenüberwachungsvorrichtung auch in einem nicht-flüchtigen Speicherbaustein abgelegt, so dass diese bei einem Neustart zur Verfügung stehen. Beispielsweise kann ein so genannter SPI-Flash Baustein verwendet werden, um eine Sperre auch bei einem erneuten Start des Computersystems aufrecht zu erhalten.

Obwohl in dem Ausführungsbeispielen Schnittstellenüberwachungsvorrichtungen 1 mit nur einem Schnittstellenanschluss 2 beschrieben wurden, eignet sich die erfindungsgemäße Vorrichtung und das erfindungsgemäße Verfahren selbstverständlich auch zur Verwendung in Systemen mit einer Vielzahl von Schnittstellenanschlüssen, wobei dann vorzugsweise jeder Schnittstellenanschluss 2 separat überwacht wird.

### Bezugszeichenliste

- 1: Schnittstellenüberwachungsvorrichtung
- 2: Schnittstellenanschluss
- 3: Überwachungsschaltung
- 4: integrierter Schaltkreis
- 5: Schmitt-Trigger-Schaltung
- 6: UND-Gatter
- 7: Zeitgeberschaltung
- 8: Inverter
- 9: Steuerausgang
- 10: Steuervorrichtung
- 11: BIOS
- 12: Peripheriegerät
- 13: Trennschaltung
- 14: Statusregister
- 15: Datenleitung
- 16: erste Steuersignalleitung
- 17: zweite Steuersignalleitung
- 18: dritte Steuersignalleitung
- 19: vierte Steuersignalleitung
- 20: Verfahren zum Überwachen eines Schnittstellenanschlusses
- 21 - 27: Verfahrensschritte
- C₁: Kondensator
- R₁: Widerstand
- D+: positive Datenleitung
- D-: negative Datenleitung
- GND: Massepotential
- V_{CC}: Versorgungsspannung
- *CLR*: Löschsignal
- R: Reset-Signal
- Q: Steuersignal

## Patentansprüche

1. Schnittstellenüberwachungsvorrichtung (1) mit mindestens einem Schnittstellenanschluss (2) für ein Peripheriegerät (12), einer Überwachungsschaltung (3) und einer Steuervorrichtung (10),
**dadurch gekennzeichnet, dass**
- die Überwachungsschaltung (3) wenigstens eine Monoflopschaltung umfasst, über die eine Inaktivität wenigstens einer Datenleitung (15) des wenigstens einen Schnittstellenanschlusses (2) erkannt wird; und
- die Überwachungsschaltung (3) dazu eingerichtet ist, den wenigstens einen Schnittstellenanschluss (2) auf ein Trennen eines daran angeschlossenen Peripheriegerätes (12) hin zu überwachen, und
- die Steuervorrichtung (10) dazu eingerichtet ist, den wenigstens einen Schnittstellenanschluss (2) in jeder der folgenden Situationen dauerhaft bis zu einem Neustart der Schnittstellenüberwachungsvorrichtung (1) zu deaktivieren: wenn an dem wenigstens einem Schnittstellenanschluss (2) bei einer Initialisierung kein oder ein nicht zugelassenes Peripheriegerät (12) angeschlossen ist oder wenn ein Trennen eines daran angeschlossenen Peripheriegerätes (12) durch die Überwachungsschaltung (3) erkannt wurde.

2. Schnittstellenüberwachungsvorrichtung (1) nach Anspruch 1,
**dadurch gekennzeichnet, dass**
die Monoflopschaltung (3) wenigstens eine Schmitt-TriggerSchaltung (5a) umfasst, über die wenigstens eine Datenleitung (15) des Schnittstellenanschlusses (2) überwacht wird.

3. Schnittstellenüberwachungsvorrichtung (1) nach einem der Ansprüche 1 bis 2, **dadurch gekennzeichnet, dass** die Steuervorrichtung (10) in ein BIOS (11) integriert ist und die Überwachungsschaltung (3) im Falle eines Trennens ein Signal an das BIOS (11) schickt.

4. Schnittstellenüberwachungsvorrichtung (1) nach einem der Ansprüche 1 bis 2, **dadurch gekennzeichnet, dass** die Steuervorrichtung (10) als Hardwareschaltung ausgeführt ist, wobei im Falle eines Trennens wenigstens eine Datenleitung (15) des wenigstens einen Schnittstellenanschlusses (2) dauerhaft deaktiviert wird.

5. Schnittstellenüberwachungsvorrichtung (1) nach einem der Ansprüche 1 bis 4, **dadurch gekennzeichnet, dass** die Schnittstellenüberwachungsvorrichtung (1) eine Mehrzahl von Schnittstellenanschlüssen (2) aufweist und für jeden Schnittstellenanschluss (2) eine eigene Überwachungsschaltung (3) vorgesehen ist.

6. Verfahren (20) zum Überwachen eines Schnittstellenanschlusses (2) durch eine Schnittstellenüberwachungsvorrichtung (1) mit einer Überwachungsschaltung (3) und einer Steuervorrichtung (10) mit den Schritten:
a) Initialisieren des Schnittstellenanschlusses (2),
b) Erkennen, ob ein Peripheriegerät (12) an dem Schnittstellenanschluss (2) angeschlossen ist,
c) Deaktivieren des Schnittstellenanschlusses (2) durch die Steuervorrichtung (10), wenn kein Peripheriegerät (12) an dem Schnittstellenanschluss (2) erkannt wurde,
d) Erkennen des Gerätetyps, wenn ein Peripheriegerät (12) an dem Schnittstellenanschluss (2) erkannt wurde,
e) Deaktivieren des Schnittstellenanschlusses (2) durch die Steuervorrichtung (10), wenn der erkannte Gerätetyp einer nicht zugelassenen Geräteklasse entspricht,
f) fortlaufendes Überwachen des Schnittstellenanschlusses (2) durch die Überwachungsschaltung (3) auf ein Trennen des an den Schnittstellenanschluss (2) angeschlossenen Peripheriegerätes (12), wobei mittels einer Monoflopschaltung eine Inaktivität wenigstens einer Datenleitung (15) des wenigstens einen Schnittstellenanschlusses (2) erkannt wird, und
g) Deaktivieren des Schnittstellenanschlusses (2) durch die Steuervorrichtung (10), wenn ein Trennen des Peripheriegerätes (12) erkannt wurde,
wobei
die Deaktivierung des Schnittstellenanschlusses (2) durch die Steuervorrichtung (10) nur durch einen Neustart der Schnittstellenüberwachungsvorrichtung (1) mit anschließender erneuten Überwachung des Schnittstellenanschlusses (2) gemäß den Schritten a) bis g) oder über einen geschützten Zugang zu der Schnittstellenüberwachungsvorrichtung (1) aufgehoben werden kann.

7. Verfahren nach Anspruch 6, **dadurch gekennzeichnet, dass**
- im Schritt a) zusätzlich die Überwachungsschaltung (3) aktiviert wird, die mit dem Schnittstellenanschluss (2) verbunden ist, und
- der Schritt f) durch die Überwachungsschaltung (3) unmittelbar nach ihrer Aktivierung ausgeführt wird.

8. Verfahren nach Anspruch 6 oder 7,
**dadurch gekennzeichnet, dass**
die Schritte a) bis e) innerhalb eines vorbestimmten Zeitraums nach dem Aktivieren des Schnittstellenanschlusses (2) durchgeführt werden.

## Claims

1. Interface monitoring device (1) having at least one interface connection (2) for a peripheral device (12), a monitoring circuit (3) and a control device (10), **characterized in that**
- the monitoring circuit (3) comprises at least one monoflop circuit which is used to detect inactivity of at least one data line (15) of the at least one interface connection (2); and
- the monitoring circuit (3) is set up to monitor the at least one interface connection (2) for disconnection of a peripheral device (12) connected thereto, and
- the control device (10) is set up to permanently deactivate the at least one interface connection (2) in each of the following situations until the interface monitoring device (1) is restarted:
if no peripheral device (12) or an unauthorized peripheral device (12) is connected to the at least one interface connection (2) during initialization or if disconnection of a peripheral device (12) connected thereto has been detected by the monitoring circuit (3).

2. Interface monitoring device (1) according to Claim 1,
**characterized in that**
the monoflop circuit (3) comprises at least one Schmitt trigger circuit (5a) which is used to monitor at least one data line (15) of the interface connection (2).

3. Interface monitoring device (1) according to either of Claims 1 and 2, **characterized in that**
the control device (10) is integrated in a BIOS (11) and the monitoring circuit (3) sends a signal to the BIOS (11) in the event of disconnection.

4. Interface monitoring device (1) according to either of Claims 1 and 2, **characterized in that**
the control device (10) is in the form of a hardware circuit, at least one data line (15) of the at least one interface connection (2) being permanently deactivated in the event of disconnection.

5. Interface monitoring device (1) according to one of Claims 1 to 4, **characterized in that**
the interface monitoring device (1) has a plurality of interface connections (2) and a separate monitoring circuit (3) is provided for each interface connection (2).

6. Method (20) for monitoring an interface connection (2) by means of an interface monitoring device (1) having a monitoring circuit (3) and a control device (10), comprising the following steps:
a) initializing the interface connection (2),
b) detecting whether a peripheral device (12) is connected to the interface connection (2),
c) deactivating the interface connection (2) by the control device (10) if no peripheral device (12) has been detected at the interface connection (2),
d) detecting the device type if a peripheral device (12) has been detected at the interface connection (2),
e) deactivating the interface connection (2) by the control device (10) if the detected device type corresponds to an unauthorized device class,
f) continuously monitoring the interface connection (2) by the monitoring circuit (3) for disconnection of the peripheral device (12) connected to the interface connection (2), a monoflop circuit being used to detect inactivity of at least one data line (15) of the at least one interface connection (2), and
g) deactivating the interface connection (2) by the control device (10) if disconnection of the peripheral device (12) has been detected,
in which case
the deactivation of the interface connection (2) by the control device (10) can be cancelled only by restarting the interface monitoring device (1) with subsequent renewed monitoring of the interface connection (2) according to steps a) to g) or by means of protected access to the interface monitoring device (1).

7. Method according to Claim 6, **characterized in that**
- the monitoring circuit (3), which is connected to the interface connection (2), is additionally activated in step a), and
- step f) is carried out by the monitoring circuit (3) immediately after it has been activated.

8. Method according to Claim 6 or 7,
**characterized in that**
steps a) to e) are carried out within a predetermined period after the interface connection (2) has been activated.

## Revendications

1. Dispositif de contrôle d'interface (1) comportant au moins un connecteur d'interface (2) destiné à un périphérique (12), un circuit de surveillance (3) et un dispositif de commande (10), **caractérisé en ce que**
- le circuit de surveillance (3) comprend au moins un circuit multivibrateur monostable par l'intermédiaire duquel une inactivité d'au moins une ligne de données (15) de l'au moins un connecteur d'interface (2) est détectée ; et
- le circuit de surveillance (3) est conçu pour surveiller l'au moins un connecteur d'interface (2) pour détecter une séparation d'un dispositif périphérique qui lui est connecté (12), et
- le dispositif de commande (10) est conçu pour désactiver l'au moins un connecteur d'interface (2) dans chacun des cas suivants de manière prolongée jusqu'à un redémarrage du dispositif de contrôle d'interface (1) :
lorsqu'aucun périphérique ou lorsqu'un périphérique non autorisé (12) est raccordé lors d'une initialisation à l'au moins un connecteur d'interface (2) ou lorsqu'une séparation d'un périphérique (12) qui lui est connecté a été détectée par le circuit de surveillance (3).

2. Dispositif de surveillance d'interface (1) selon la revendication 1, **caractérisé en ce que** le circuit multivibrateur monostable (3) comprend au moins un circuit à trigger de Schmitt (5a) par l'intermédiaire duquel au moins une ligne de données (15) du connecteur d'interface (2) est surveillée.

3. Dispositif de surveillance d'interface (1) selon l'une quelconque des revendications 1 à 2, **caractérisé en ce que** le dispositif de commande (10) est intégré à un BIOS (11) et **en ce que** le circuit de surveillance (3) envoie un signal au BIOS (11) en cas de séparation.

4. Dispositif de surveillance d'interface (1) selon l'une quelconque des revendications 1 à 2, **caractérisé en ce que** le dispositif de commande (10) est réalisé sous la forme d'un circuit matériel, dans lequel, en cas de séparation, au moins une ligne de données (15) de l'au moins un connecteur d'interface (2) est désactivée de manière prolongée.

5. Dispositif de surveillance d'interface (1) selon l'une quelconque des revendications 1 à 4, **caractérisé en ce que** le dispositif de surveillance d'interface (1) comporte une pluralité de connecteurs d'interface (2) et **en ce que**, pour chaque connecteur d'interface (2), il est prévu un circuit de surveillance (3) qui lui est propre.

6. Procédé (20) de surveillance d'un connecteur d'interface (2) par l'intermédiaire d'un dispositif de surveillance d'interface (1) comportant un circuit de surveillance (3) et un dispositif de commande (10), comprenant les étapes consistant à :
a) initialiser le connecteur d'interface (2),
b) détecter si un périphérique (12) est raccordé au connecteur d'interface (2),
c) désactiver le connecteur d'interface (2) au moyen du dispositif de commande (10) lorsqu'aucun périphérique (12) n'a été détecté sur le connecteur d'interface (2),
d) détecter le type d'appareil lorsqu'un périphérique (12) a été détecté sur le connecteur d'interface (2),
e) désactiver le connecteur d'interface (2) au moyen du dispositif de commande (10) lorsque le type d'appareil détecté correspond à une classe d'appareil non autorisée,
f) surveiller en continu le connecteur d'interface (2) au moyen du circuit de surveillance (3) pour détecter une séparation du périphérique (12) raccordé au connecteur d'interface (2), dans lequel une inactivité d'au moins une ligne de données (15) de l'au moins un connecteur d'interface (2) est détectée au moyen d'un circuit multivibrateur monostable, et
g) désactiver le connecteur d'interface (2) au moyen du dispositif de commande (10) lorsqu'une séparation du périphérique (12) a été détectée, dans lequel la désactivation du connecteur d'interface (2) ne peut être désactivée par le dispositif de commande (10) que par l'intermédiaire d'un redémarrage du dispositif de surveillance d'interface (1) suivi d'une reprise de la surveillance du connecteur d'interface (2) conformément aux étapes a) à g) ou par l'intermédiaire d'un accès protégé au dispositif de surveillance d'interface (1).

7. Procédé selon la revendication 6, **caractérisé en ce que**
- lors de l'étape a), on active en outre le circuit de surveillance (3) qui est connecté au connecteur d'interface (2), et
- l'étape f) est effectuée par le circuit de surveillance (3) immédiatement après son activation.

8. Procédé selon la revendication 6 ou 7, **caractérisé en ce que** les étapes a) à e) sont effectuées au cours d'un intervalle de temps prédéterminé après l'activation du connecteur d'interface (2).
